# EUROPEAN PATENT APPLICATION

(11) **EP 2 845 930 A1**
(43) Date of publication of application: **11.03.2015**
(21) Application number: 14180138.1
(22) Date of filing: 07.08.2014
(51) Int. Cl.: D01F 6/60, C08G 69/02

(54) **Monofilament based on a polyamide composition**

(30) Priority: 04.09.2013 FR 1358447
(71) Applicant: ARKEMA FRANCE, 92700 Colombes (FR)
(72) Inventor: Pineau, Quentin, 27000 EVREUX (FR); D'Herbecourt, Bruno, BERNAY 27300 (FR); Li, Zhenzhong, 215-613 PR Jiangsu (CN)

(57) **Abstract**

The invention relates to a monofilament made from a polyamide composition comprising at least 70 wt.% of a polyamide resulting from the condensation of:
- an aliphatic diamine comprising 4 to 18 carbon atoms, together with
- a (cyclo)aliphatic diacid comprising 10 to 18 carbon atoms, and with
- an aliphatic monocarboxylic acid comprising 2 to 12 carbon atoms as a chain stopping agent.

The invention also relates to a process for making this monofilament.

## Description

### TECHNICAL FIELD

The present invention relates to a monofilament based on a polyamide composition as well as to a process for making same.

### TECHNICAL BACKGROUND

Polymer monofilaments, such as polyamide monofilaments, are commonly used in toothbrushes as well as in other brush-type household or industrial articles.

Polyamide 6.12 and polyamide 6.10 are the two most common examples of polymers used in such applications.

Polyamide monofilaments are manufactured using an extrusion process. At the industrial scale, the extrusion process is conducted at high speed and on a long timescale. In these circumstances, stability of the polymer product (in particular processing stability and color stability), both over time and at high temperature, is critical.

There is therefore a need to provide monofilaments made from a polyamide composition having an improved stability (in particular processing stability and color stability).

### SUMMARY OF THE INVENTION

It is a first object of the invention to provide a monofilament made from a polyamide composition comprising at least 70 wt.% of a polyamide resulting from the condensation of:
- an aliphatic diamine comprising 4 to 18 carbon atoms, together with
- a (cyclo)aliphatic diacid comprising 10 to 18 carbon atoms, and with
- an aliphatic monocarboxylic acid comprising 2 to 12 carbon atoms as a chain stopping agent.

According to one embodiment, the aliphatic monocarboxylic acid is acetic acid and/or lauric acid.

According to one embodiment, the aliphatic diamine comprises 5 to 12 carbon atoms, preferably 6 carbon atoms.

According to one embodiment, the polyamide is:
- polyamide 6.10 having an acetamide-terminal group; or
- polyamide 6.10 having a lauramide-terminal group; or
- polyamide 6.12 having an acetamide-terminal group; or
- polyamide 6.12 having a lauramide-terminal group, or
- polyamide 10.12 having an acetamide-terminal group; or
- polyamide 10.12 having a lauramide-terminal group.

According to one embodiment, the polyamide composition comprises at least 75 wt.%, preferably at least 80 wt.% or at least 85 wt.% or at least 90 wt.% or at least 95 wt.% or at least 98 wt.% or at least 99 wt.% of said polyamide.

According to one embodiment, the polyamide composition is free of a polyamide resulting from the condensation of a diamine derived from a polyethylene glycol with a (cyclo)aliphatic diacid comprising 10 to 18 carbon atoms.

According to one embodiment, the polyamide composition is free of alkylene carbonate added to the monomers before condensation that means that the polyamide composition is free of a homopolyamide modified ethylene carbonate.

According to one embodiment, the sum of number of carbon atoms of the diamines and the (cyclo)aliphatic diacid is higher than 12.

According to one embodiment, the polyamide composition is free of a piperidone compound, in particular 2,2,6,6- tetramethylpiperidone.

According to one embodiment, the polyamide composition is free of a polyamide resulting from the condensation of an orthoaromatic diamine with a (cyclo)aliphatic diacid comprising 10 to 18 carbon atoms.

According to one embodiment, the polyamide composition is free of a polyamide resulting from the condensation of a diamine derived from a polyethylene glycol with a (cyclo)aliphatic diacid comprising 10 to 18 carbon atoms and/or of a homopolyamide modified ethylene carbonate and/or of a piperidone compound, in particular 2,2,6,6- tetramethylpiperidone, and/or of a polyamide resulting from the condensation of an orthoaromatic diamine with a (cyclo)aliphatic diacid comprising 10 to 18 carbon atoms.

According to one embodiment, the polyamide composition comprises 100 wt.% of said polyamide.

According to one embodiment, the polyamide composition comprises, preferably consists of, one or more optical brighteners and/or one or more antioxidant agents, in addition to said polyamide.

It is another object of the invention to provide a process of making a monofilament, comprising extruding a polyamide composition through a die, wherein the polyamide composition comprises at least 70 wt.% of a polyamide resulting from the condensation of:
- an aliphatic diamine comprising 4 to 18 carbon atoms, together with
- a (cyclo)aliphatic diacid comprising 10 to 18 carbon atoms, and with
- an aliphatic monocarboxylic acid comprising 2 to 12 carbon atoms as a chain stopping agent.

According to one embodiment, the aliphatic monocarboxylic acid is acetic acid and/or lauric acid.

According to one embodiment, the polyamide composition is as described above.

According to one preferred embodiment, the process of the invention is carried out in a batch process.

It is another object of the invention to provide the use of an aliphatic monocarboxylic acid comprising 2 to 12 carbon atoms as a chain stopping agent, for stabilizing a monofilament made from a polyamide composition comprising at least 70 wt.% of a polyamide resulting from the condensation of:
- an aliphatic diamine comprising 4 to 18 carbon atoms, together with
- a (cyclo)aliphatic diacid comprising 10 to 18 carbon atoms.

According to one embodiment, the aliphatic monocarboxylic acid is acetic acid and/or lauric acid.

According to one embodiment, the polyamide composition is as described above.

It is another object of the invention to provide a sanitary article comprising one or more monofilaments described above, said sanitary article being preferably a toothbrush.

It is another object of the invention to provide a cleansing article comprising one or more monofilaments described above, said cleansing article being preferably a brush.

The present invention makes it possible to overcome the drawbacks of the prior art. In particular the invention makes it possible to provide monofilaments made from a polyamide composition having an improved stability (in particular an improved processing stability and/or an improved color stability), while preserving the required mechanical properties of the monofilaments - or even improving said mechanical properties, according to some embodiments.

This is achieved by using lauric acid and/or acetic acid (or another aliphatic monocarboxylic acid comprising 2 to 12 carbon atoms) as a chain stopping agent for the polyamide.

It has been found that this type of chain stopping agent improves the stability of polyamide, while preserving (or even improving) the mechanical properties of the monofilaments.

Also, it has been found that this type of chain stopping agent is superior to other conventional chain stopping agents, which tend to induce undesirable side effects.

For instance, benzoic acid is a conventional chain stopping agent, but its presence requires an increased processing temperature and generates undesirable benzenic compounds.

Similarly, stearic acid is another conventional chain stopping agent, but its presence results in monofilaments having a greasy / oily feel or touch, making them unsuitable for most applications.

Laurylamine is another possible chain stopping agent, but it leads to an undesirable coloring of the product.

### DESCRIPTION OF EMBODIMENTS

The invention will now be described in more detail without limitation in the following description.

All proportions are weight percentages unless mentioned otherwise.

The invention makes use of a polyamide composition based on a polyamide designated as PA X.Y, where X is an integer from 4 to 18 (preferably 5 to 12) and Y is an integer from 10 to 18 (preferably 10 to 12).

X and Y represent respective residues from the condensation of an aliphatic diamine with a (cyclo)aliphatic diacid, preferably an aliphatic diacid.

Preferably, use is made of PA 6.12 (polyhexamethylene dodecanamide) or of PA 6.10 (polyhexamethylene decanamide), or PA 10.12 (polydecamethylene dodecanamide).

Preferably, X +Y>12.

Besides, an aliphatic monocarboxylic acid comprising 2 to 12 carbon atoms is used as a chain stopping agent in the polymerization process leading to the PA X.Y polyamide.

This chain stopping agent can be linear or branched, preferably linear. It can be substituted or not and preferably is not substituted.

Acetic acid and/or lauric acid are preferred chain stopping agents to be used in the polymerization process leading to the PA X.Y polyamide. Acetic acid is the acid of formula CH₃COOH. Lauric acid is the acid of formula C₁₁H₂₃COOH.

Other possible stopping agents include the following linear monocarboxylic acids: C₂H₅COOH; C₃H₇COOH; C₄H₉COOH; C₅H₁₁COOH; C₆H₁₃COOH; C₇H₁₅COOH; C₈H₁₇COOH; C₉H₁₉COOH; and C₁₀H₂₁COOH.

The monocarboxylic acid reacts with the amine terminal groups of the polyamide to yield C2-C12 amide-terminal groups, for instance acetamide / lauramide-terminal groups, of respective formulas -(NHCO-CH₃) and -(NHCO-C₁₁H₂₃).

The expression *"C2-C12 amide-terminal polyamide"* used in the present application means that at least part of the individual polyamide molecules have at least one such C2-C12 amide-terminal group (e.g. an acetamide and/or lauramide-terminal group). But it should be emphasized that this is a statistical notion and that, generally, some individual polyamide molecules have no amide-terminal group, some individual polyamide molecules have one amide-terminal group (at one end of the polyamide chain) and some individual polyamide molecules have two amide-terminal groups (at both ends of the polyamide chain).

According to one embodiment, only one of the above monocarboxylic acids is used as a chain stopping agent, for instance only acetic acid or only lauric acid.

Alternatively, mixtures of two or more of the above monocarboxylic acids may be used as a chain stopping agent (e.g. both acetic acid and lauric acid), in which case the PA X.Y polyamide which is obtained comprises various amide-terminal groups.

Furthermore, mixtures of two or more of the above C2-C12 amide-terminal PA X.Y can be used: for instance a mixture of lauramide or acetamide-terminal PA 6.12, or of lauramide or acetamide-terminal PA 6.10 and of lauramide or acetamide-terminal PA 10.12.

However, it is preferred that only one such C2-C12 amide-terminal PA X.Y polyamide be used, for instance only lauramide or acetamide-terminal PA 6.10, or only lauramide or acetamide-terminal PA 6.12 or only lauramide or acetamide-terminal PA 10.12.

The C2-C12 amide-terminal PA X.Y preferably has a molecular weight of from 10,000 to 40,000 g/mol.

The C2-C12 amide-terminal PA X.Y can be for instance prepared by melt-polymerization. The polyamide is obtained firstly by heating, at high temperature and high pressure, a mixture comprising the monomers (diamine and diacid), water (to make the stirring of the medium easier), the chain stopping agent and optional additives (heat stabilizer, defoaming agent, etc.). This step is generally performed at a temperature of 100-300°C and at a pressure of 3-35 bar.

Water vapor is then eliminated by degassing and the pressure is reduced until atmospheric pressure is reached. During a third step, polycondensation occurs under nitrogen sweep or under vacuum, so as to reach the desired molecular weight.

The content of chain stopping agent introduced is calculated according to the desired molecular weight. A possible range is 25-100 mmol per kg of polymer.

According to one preferred embodiment, preparation of the C2-C12 amide-terminal PA X.Y is carried out in a batch and not in a continuous process.

According to one preferred embodiment, the polyamide composition comprises the above C2-C12 amide-terminal PA X.Y as the sole polyamide component in the composition. Alternatively, one or more further polyamide compounds may be included in the composition in addition to those (said further polyamide compounds being prepared with or without a chain stopping agent). The weight proportion of C2-C12 amide-terminal PA X.Y in the (total) composition is at least 70%, preferably at least 75% or at least 80% or at least 85% or at least 90% or at least 95% or at least 98% or at least 99%.

The further polyamides, if present, can be e.g. selected from PA 11 and PA 12. Copolyamides may also be used.

Other possible additives can be present, such as:
- optical brighteners (in an amount of less than 0.1% relative to the total composition);
- antioxidants (in an amount of less than 1% relative to the total composition);

Advantageously, the polyamide composition used in the invention does not contain any additive beside the above. In particular, advantageously, this polyamide composition does not contain any filler or reinforcing material.

The polyamide composition may be prepared by compounding the C2-C12 amide-terminal PA X.Y with the other optional components. The composition is usually recovered in the form of pellets or granules.

The above polyamide composition is used for making a monofilament. A monofilament is a yarn composed of a single strand of untwisted synthetic fiber.

The polyamide composition is preferably provided in a pelletized form. It is typically fed from a hopper into the barrel of an extruder comprising a rotating screw. The rotating screw forces the granules forward within the barrel, which is heated to the desired melt temperature (which can range from e.g. 250°C to 300°C).

It may be advantageous to set a heating profile for the barrel in which several independent controlled heater zones gradually increase the temperature of the barrel from the rear (where the material enters) to the front. This allows the material to melt gradually as it is pushed through the barrel and lowers the risk of overheating which may cause degradation in the polymer.

Alternatively, the melt temperature may be maintained by pressure and friction alone inside the barrel. Cooling means may be provided if too much heat is generated.

At the front of the barrel, the molten composition leaves the screw and may travel through a screen pack to remove any contaminants in the melt. The screens may be reinforced by a breaker plate. The screen pack/breaker plate assembly may also serve to create back pressure in the barrel. Back pressure may be required for uniform melting and proper mixing of the composition. The breaker plate and screen pack combination may also pre-shape the composition in a longitudinal orientation.

Then the molten composition enters a die, which gives the monofilament its profile. The monofilament may then be cooled, e.g. by pulling it through a water bath.

If additives are to be present, they may be added when compounding the polyamide to granules, or alternatively they may be directly fed (in liquid or pellet form) to the extruder together with the polyamide granules.

The monofilaments thus achieved may have a diameter ranging from 0.02 mm to 3 mm preferably from 0.05 to 1.6 mm.

The monofilaments of the invention may be used for manufacturing various kinds of brushes, and in particular toothbrushes. Other applications include abrasive filaments, synthetic brush filaments, dental care filaments, filters, paper machine clothing, paint brushes and cosmetic articles.

### EXAMPLES

The following examples illustrate the invention without limiting it.

### Example 1: polymerization process

In a reactor the following components were introduced under stirring:
- 23.26 kg dodecanedioic acid;
- 11.73 kg hexamethylenediamine;
- 157.63 g acetic acid;
- 2 kg water; and
- 1.32 g antifoaming agent (silicone oil).

The reactor was progressively heated under stirring until the inside temperature reached 240°C, while the water formed was eliminated in order to maintain an internal pressure of 14 bar.

The internal pressure of the reactor was reduced to atmospheric pressure during 1 hour and then nitrogen flushing was performed until the required viscosity was reached.

### Example 2 - stability

Viscosity stability and color stability were assessed for the four polyamide compounds prepared according to example 1 or by analogy with example 1, namely standard PA 6.12 (= PA 6.12 prepared without chain-stopping agent), standard PA 6.10 (= PA 6.10 prepared without chain-stopping agent), formulated PA 6.12 (= PA 6.12 prepared with the chain-stopping agent) and formulated PA 6.10 (= PA 6.10 prepared with the chain-stopping agent).

Viscosity stability was assessed by monitoring the evolution of the melt viscosity at 260°C in a plate-to-plate rheometer.

Color stability was assessed by optically controlling samples after a 30-minute treatment in an oven at 250°C.

The results are summarized in Table 1 below.

**Table 1**

| **Property** | **Standard PA 6.12** | **Standard PA 6.10** | **Formulated PA 6.12** | **Formulated PA 6.10** |
|---|---|---|---|---|
| Viscosity stability | +140% | +150% | +35% | +40% |
| Color stability | Brown | Brown | Yellow | Yellow |

These results demonstrate that the compositions according to the invention provide better stability than standard compositions.

Similar results are obtained with standard and formulated PA 10.12.

### Example 3 - physical and mechanical properties

The melting point and the net resin flexibility of the four compositions prepared according to example 1 (or by analogy with example 1) were assessed.

The melting point was determined by differential scanning calorimetry (at 20°C/min).

The net resin flexibility was determined by mechanical testing.

The results are summarized in table 2 below.

**Table 2**

| **Property** | **Standard PA 6.12** | **Standard PA 6.10** | **Formulated PA 6.12** | **Formulated PA 6.10** |
|---|---|---|---|---|
| Melting point | 215°C | 223°C | 215°C | 223°C |
| Net resin flexibility | 2100 MPa | 2250 MPa | 2100 MPa | 2150 MPa |

Similar results are obtained with standard and formulated PA 10.12.

The above results demonstrate that relevant mechanical properties are hardly affected by the addition of the chain stopping agent.

## Claims

1. A monofilament made from a polyamide composition comprising at least 70 wt.% of a polyamide resulting from the condensation of:
- an aliphatic diamine comprising 4 to 18 carbon atoms, together with
- a (cyclo)aliphatic diacid comprising 10 to 18 carbon atoms, and with
- an aliphatic monocarboxylic acid comprising 2 to 12 carbon atoms as a chain stopping agent.

2. The monofilament of claim 1, wherein the aliphatic monocarboxylic acid is acetic acid and/or lauric acid.

3. The monofilament of claim 1 or 2, wherein the aliphatic diamine comprises 5 to 12 carbon atoms, preferably 6 carbon atoms.

4. The monofilament of one of claims 1 to 3, wherein the polyamide is:
- polyamide 6.10 having an acetamide-terminal group; or
- polyamide 6.10 having a lauramide-terminal group; or
- polyamide 6.12 having an acetamide-terminal group; or
- polyamide 6.12 having a lauramide-terminal group.

5. The monofilament of one of claims 1 to 4, wherein the polyamide composition comprises at least 75 wt.%, preferably at least 80 wt.% or at least 85 wt.% or at least 90 wt.% or at least 95 wt.% or at least 98 wt.% or at least 99 wt.% of said polyamide.

6. The monofilament of one of claims 1 to 5, wherein the polyamide composition comprises, preferably consists of, one or more optical brighteners and/or one or more antioxidant agents, in addition to said polyamide.

7. A process of making a monofilament, comprising extruding a polyamide composition through a die, wherein the polyamide composition comprises at least 70 wt.% of a polyamide resulting from the condensation of:
- an aliphatic diamine comprising 4 to 18 carbon atoms, together with
- a (cyclo)aliphatic diacid comprising 10 to 18 carbon atoms, and with
- an aliphatic monocarboxylic acid comprising 2 to 12 carbon atoms as a chain stopping agent.

8. The process of claim 7, wherein the polyamide composition is as described in one of claims 1 to 6.

9. The use of an aliphatic monocarboxylic acid comprising 2 to 12 carbon atoms as a chain stopping agent, for stabilizing a monofilament made from a polyamide composition comprising at least 70 wt.% of a polyamide resulting from the condensation of:
- an aliphatic diamine comprising 4 to 18 carbon atoms, together with
- a (cyclo)aliphatic diacid comprising 10 to 18 carbon atoms.

10. The use of claim 9, wherein the polyamide composition is as described in one of claims 1 to 6.

11. A sanitary article comprising one or more monofilaments of one of claims 1 to 6, said sanitary article being preferably a toothbrush.

12. A cleansing article comprising one or more monofilaments of one of claims 1 to 6, said cleansing article being preferably a brush.
